# EUROPÄISCHE PATENTSCHRIFT

(11) **EP 3 248 821 B1**
(45) Veröffentlichungstag und Bekanntmachung des Hinweises auf die Patenterteilung: **06.05.2020**
(21) Anmeldenummer: 17163044.5
(22) Anmeldetag: 27.03.2017
(51) Int. Cl.: B60K 1/00, B60K 11/02, F04D 29/60

(54) **VORRICHTUNG ZUR REGELUNG MINDESTENS EINES FLUIDSTROMS IN EINEM FAHRZEUG**
DEVICE FOR CONTROLLING AT LEAST ONE FLUID FLOW IN A VEHICLE
DISPOSITIF DE RÉGLAGE D'AU MOINS UN ÉCOULEMENT DE FLUIDE DANS UN VÉHICULE

(30) Priorität: 27.05.2016 DE 102016209204
(43) Veröffentlichungstag der Anmeldung: 29.11.2017
(73) Patentinhaber: Robert Bosch GmbH, 70442 Stuttgart (DE)
(72) Erfinder: Hein, Bernd, 72270 Baiersbronn/Schoenmuenzach (DE); Yilmaz, Fatih, 22846 Nordersteet (DE); Thiery, Jerome, 67100 Strasbourg (FR)

(56) Entgegenhaltungen:
- WO-A1-2014/120260
- WO-A1-2015/146336
- US-A1- 2004 086 331
- US-A1- 2012 118 401
- US-A1- 2016 016 463

## Beschreibung

Die Erfindung betrifft eine Vorrichtung zur Regelung mindestens eines Fluidstroms in einem Fahrzeug nach Gattung der unabhängigen Ansprüche.

### Stand der Technik

Es ist bereits eine Vorrichtung zur Regelung eines Fluidstroms bekannt. Die bekannte Vorrichtung umfasst eine Pumpe, die mittels einem Halter und einer Montageeinrichtung an einem Kraftfahrzeug angebracht ist. Der Halter verbindet die Pumpe mit einer Montageeinrichtung. Ein erstes Ende der Montageeinrichtung ist in einer Ausnehmung des Halters eingeführt. Das dem ersten Ende gegenüberliegende zweite Ende der Montageeinrichtung weist Bohrungen auf, die ein Anschrauben der Montageeinrichtung und damit ein Verbinden der Vorrichtung mit einem Fahrzeug ermöglichen. Nachteilig an einem solchen Aufbau ist der hohe Platzbedarf, insbesondre bei Einsatz von mehr als einer Pumpe.

Die US 2016/016463 A1 offenbart eine Vorrichtung zur Regelung mindestens eines Fluidstroms in einem Fahrzeug. Die Vorrichtung weist eine erste Fluidregeleinheit zur Regelung eines ersten Fluidstroms auf und einen ersten Halter mit einem Aufnahmebereich für die erste Fluidregeleinheit, sowie einem ersten Befestigungsmittel. Die erste Fluidregeleinheit ist in dem Aufnahmebereich des ersten Halters angeordnet und das erste Befestigungsmittel ist zur Befestigung des Halters an dem Fahrzeug vorgesehen. Der erste Halter weist ein Verbindungsmittel zur Verbindung des ersten Halters mit einem zweiten Halter auf.

### Offenbarung der Erfindung

Die erfindungsgemäße Vorrichtung mit den Merkmalen des unabhängigen Anspruchs 1 hat den Vorteil, dass durch die Ausbildung eines Verbindungsmittels an einem Halter eine kostengünstige und einfache Möglichkeit gegeben ist, den Halter mit weiteren Haltern zu verbinden. Auch ist vorteilhaft, dass die Fertigung vereinfacht wird und damit Kosten für die Herstellung geringer ausfallen. Ferner ist vorteilhaft das nachträglich der Halter und die Fluidregeleinheiten nachgerüstet werden können.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, dass die Vorrichtung mindestens einen zweiten Halter mit einer zweiten Fluidregeleinheit, insbesondere zur Regelung eines zweiten Fluidstroms aufweist. Die zweite Fluidregeleinheit ist in einem Aufnahmebereich des zweiten Halters angeordnet. Der zweite Halter weist mindestens ein Verbindungsmittel auf. Besonders vorteilhaft ist, dass der zweite Halter mittels dem zweiten Verbindungsmittel mit dem ersten Halter verbunden ist. Hierdurch kann eine raumsparende Vorrichtung mit mehrere Fluidregeleinheiten ausgebildet werden. Auch ist vorteilhaft, dass die Fluidregeleinheiten besser voneinander entkoppelt, insbesondere vibrationsentkoppelt sind. Auch sind Relativbewegungen der Fluidregeleinheiten gegenüber bekannten einzeln angeordneten Fluidregeleinheiten minimiert.

Von Vorteil ist, dass die Halter mindestens zwei Verbindungsmittel aufweisen, die die Halter miteinander verbinden. Vorzugsweise können beliebig viele Verbindungsmittel ausgebildet sein, die die Halter verbinden. Es wird die Stabilität und die Entkoppelung bzw. die Dämpfung verbessert.

Vorteilhaft ist, dass mindestens ein Verbindungsmittel des ersten Halters und mindestens ein Verbindungsmittel des zweiten Halters eine Steckverbindung oder Schnappverbindung bilden. Die Montagerichtung der Steckverbindung oder der Schnappverbindung ist translatorisch oder radial. Eine Steckverbindung oder Schnappverbindung ermöglicht eine einfach herstellbare Verbindung zwischen zwei Haltern.

Als vorteilhaft anzusehen ist, dass mindestens eines der Verbindungsmittel des ersten Halters eine, insbesondere hinterschneidende, Befestigungsaussparung aufweist oder als Befestigungsnase ausgebildet ist. Auch ist vorteilhaft, dass mindestens eines der Verbindungsmittel des zweiten Halters eine, insbesondere hinterschneidende, Befestigungsaussparung aufweist oder als Befestigungsnase ausgebildet ist. Eine Befestigungsnase und eine Befestigungsaussparung, die korrespondierend ausgebildet sind, stellen ein einfach herzustellendes Verbindungsmittel dar. Auch können eine positiven Befestigungsnase und eine negative Befestigungsaussparung einfach miteinander verbunden werden.

Vorteilhaft ist, dass mindestens eine Befestigungsnase im Wesentlichen zylinderförmig ausgebildet ist. Vorzugsweise nimmt der Durchmesser der Befestigungsnase zu. Insbesondere weist mindestens eine Befestigungsnase einen zylinderförmigen Abschnitt und einen kegelstumpförmigen Abschnitt auf, wobei der zylinderförmige Abschnitt und der kegelstumpförmigen Abschnitt ineinander übergehen. Insbesondere sind der zylinderförmige und der kegelstumpfförmige Abschnitt einstückig ausgebildet.

Besonders vorteilhaft ist, dass die Längsachse der Befestigungsnase radial gegenüber dem Halter verläuft. Hierdurch wird die Montage vereinfacht.

Vorteilhaft ist, dass die Befestigungsnase eine, insbesondere durchgehenden, Bohrung aufweist. Ein Element kann in die Bohrung eingeführt werden, wodurch sich die Befestigungsnase radial ausdehnt. Insbesondere bewirkt eine Ausdehnung eine Erhöhung des Reibwerts zwischen den miteinander verbunden Verbindungselementen.

Vorteilhaft ist, dass die Befestigungsaussparung korrespondierend zu einer Befestigungsnase ausgebildet ist, wobei insbesondere die Befestigungsaussparung eine in Längsrichtung der Befestigungsaussparung verlaufende, insbesondere durchgehende Nut, aufweist. Eine solche Ausbildung vereinfacht das Verbinden der Verbindungsmittel. Auch kann hierdurch die Kraft reguliert werden mit der die Befestigungsaussparung auf die Befestigungsnase wirkt.

Von Vorteil ist, dass der erste Halter und/oder der zweite Halter einen, insbesondere ringförmigen, Grundkörper aufweisen. Der Grundkörper umgibt den Aufnahmebereich, wobei der erste Halter und/oder der zweite Halter mit einer insbesondere gleichmäßigen Radialpressung auf die Fluidregeleinheiten wirken. Der ringförmige Grundkörper ermöglicht eine optimale Kraftverteilung der Radialpressung.

Vorteilhaft ist, dass die Befestigungsnase entlang ihrer Längsachse durch einen Steg mit dem Grundkörper des Halters verbunden ist. Der Steg stellt eine kostengünstige und einfache Möglichkeit dar, die Befestigungsnase mit dem Grundkörper zu verbinden. Gleichzeitig stellt der Steg auch eine stabile Lösung dar.

Als vorteilhaft ist anzusehen, dass mindestens eines der Verbindungselemente radial außenliegend an zumindest einem der Halter ausgebildet ist. Eine solche Ausbildung ermöglicht ein einfaches Verbinden der Verbindungselemente.

Vorteilhaft ist, dass zumindest einer der Halter ein Elastomer aufweist oder teilweise, insbesondere vollständig aus einem Elastomer besteht. Das Elastomer ermöglich eine Vibrationsentkopplung zwischen der Fluidregeleinrichtung und der Montageeinrichtung, bzw. mittelbar dem Fahrzeug.

Von Vorteil ist, dass die Vorrichtung eine Montageinrichtung aufweist. Die Montageinrichtung dient insbesondere zur Befestigung des ersten Halters und des zweiten Halters an einem Fahrzeug. Die Montageeinrichtung verbindet die Befestigungsmittel zumindest des ersten Halters und des zweiten Halters. Voreilhaft ist, dass eine Vormontage erfolgen kann. Die Entkopplung, bzw. Dämpfung und/oder die Stabilität zwischen den beiden Haltern ist verbessert.

Vorteilhaft ist, dass die Vorrichtung drei oder mehr Halter aufweist, wobei mindestens ein Halter mindestens ein weiteres Verbindungselement zur Verbindung mit zwei oder mehr Halter aufweist. Vorteilhaft ist, dass hierdurch der Platzbedarf weiter gesenkt werden kann.

Die Erfindung wird im Folgenden anhand von Ausführungsbeispielen näher beschrieben. Dabei zeigen
- Figur 1: eine bekannte Abbringung einer einzelnen Pumpe mittels eines einzelnen Halters und einer einzelnen Montageeinrichtung an einem Fahrzeug,
- Figur 2: eine erfindungsgemäße Vorrichtung mit einer Befestigungsaussparung,
- Figur 3: eine Explosionsdarstellung der erfindungsgemäßen Vorrichtung gemäß Figur 2,
- Figur 4: eine erfindungsgemäße Vorrichtung mit einer Befestigungsnase,
- Figur 5: eine Explosionsdarstellung der erfindungsgemäßen Vorrichtung gemäß Figur 4,
- Figur 6: eine Darstellung zur Veranschaulichung der Montagerichtung,
- Figur 7: einer erfindungsgemäßen Vorrichtung umfassend zwei miteinander verbundener Halter,
- Figur 8: eine Draufsicht auf ein erfindungsgemäße Vorrichtung umfassend zwei miteinander verbundener Halter,
- Figur 9: eine Darstellung zur Veranschaulichung der Montage eines Montageeinrichtung und
- Figur 10: eine erfindungsgemäße Vorrichtung in perspektivischer Ansicht.

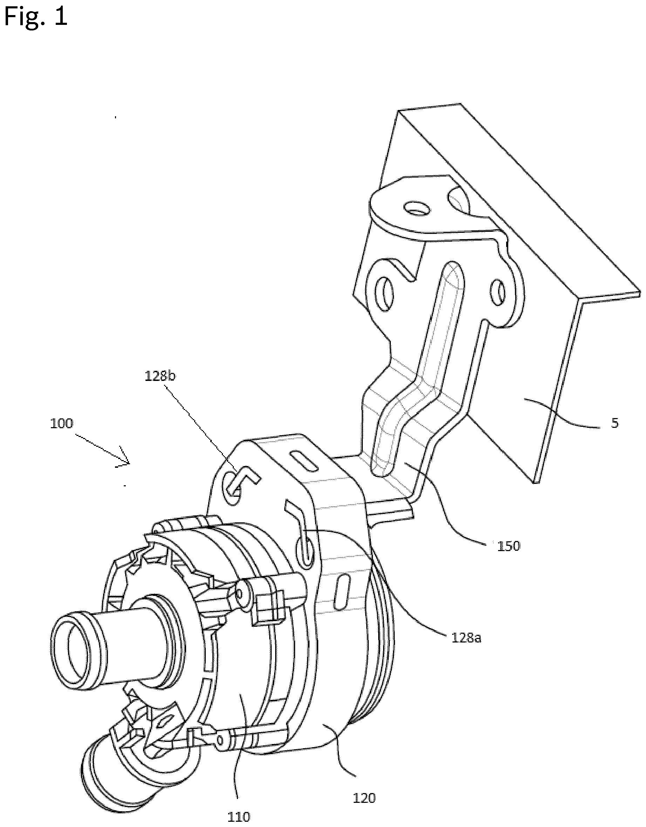

Figur 1 zeigt eine bekannte Vorrichtung 100 umfassend eine Pumpe 110, die mittels einem bekannten Halter 120 und einer Montageeinrichtung 150 an einem Kraftfahrzeug 5 angebracht ist. Das Kraftfahrzeug 5 ist hierbei zur Vereinfachung der Darstellung nur als winkelförmiges Karosserieteil 5 gezeigt. Der Halter 120 ist im Wesentlichen ringförmig ausgebildet und weist einen Aufnahmebereich auf. In dem Aufnahmebereich befindet sich die Pumpe 110. Der Halter 120 weist zwei Ausnehmungen 128a und 128b auf. Die Ausnehmungen 128a und 128b ermöglichen die Verbindung des Halters 120 mit der Montageeinrichtung 150. Die Montageeinrichtung 150 ist als Stanzbiegeblech ausgebildet. Ein erstes Ende der Montageeinrichtung 150 ist in die Ausnehmung 128 des Halters 120 eingeführt. Das dem ersten Ende gegenüberliegende zweite Ende der Montageeinrichtung 150 weist Bohrungen auf, die ein Anschrauben der Montageeinrichtung 150 an dem Fahrzeug 5 ermöglichen.

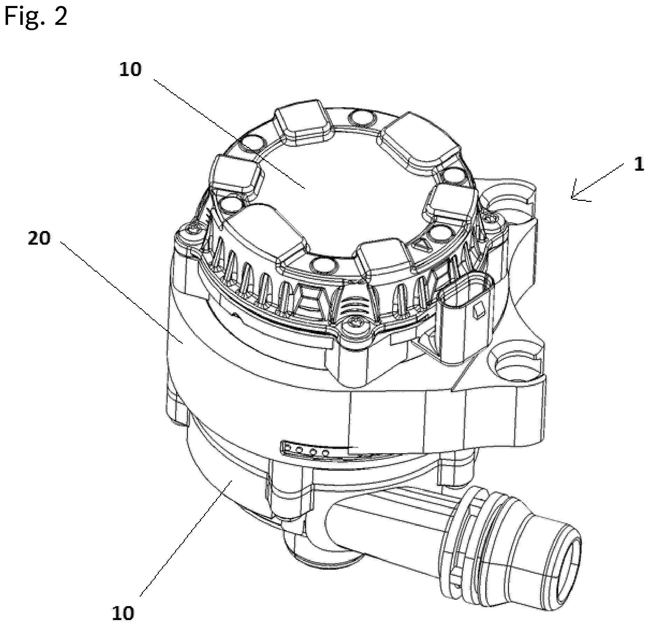

In Figur 2 ist ein erstes Ausführungsbeispiel einer erfindungsgemäßen Vorrichtung 1 dargestellt. Die Vorrichtung 1 dient zur Regelung mindestens eines ersten Fluidstroms in einem/eines Fahrzeugs 5. Die Vorrichtung 1 weist eine erste Fluidregeleinheit 10 und einen ersten Halter 20 auf.

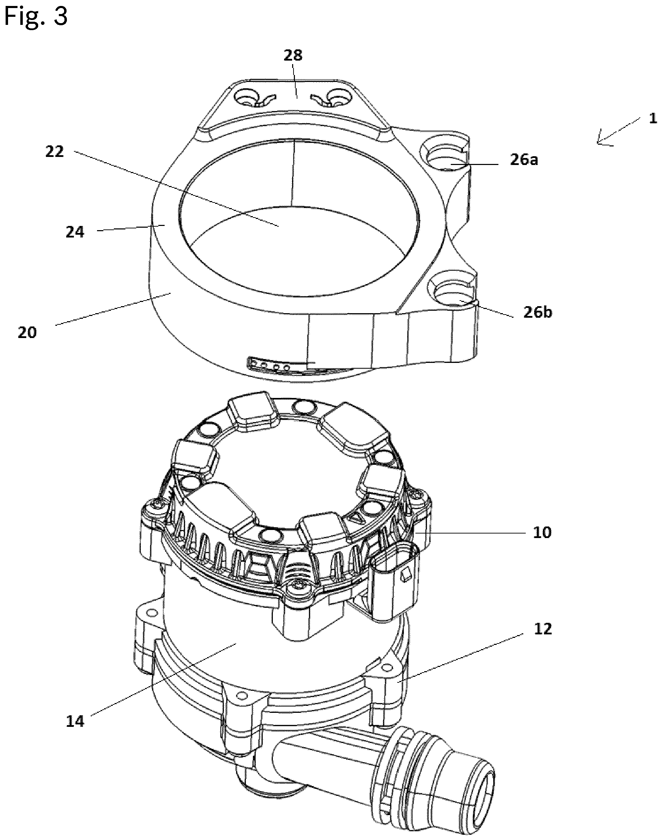

In Figur 3 ist die in Figur 2 gezeigte Vorrichtung 1 als Explosionszeichnung dargestellt. Im oberen Bereich der Figur 3 ist der erste Halter 20 dargestellt. Im unteren Bereich der Figur 3 ist die Fluidregeleinheit 10 dargestellt. Beispielhaft ist die Fluidregeleinheit 10 in Figur 3 und in Figur 2 als Pumpe, insbesondere Wasserpumpe, ausgebildet.

Der erste Halter 20 weist einen Aufnahmebereich 22 auf. Der Aufnahmebereich 22 ist so ausgebildet, dass die Fluidregeleinheit 10 in dem Aufnahmebereich aufgenommen werden kann. Die Fluidregeleinheit 10 weist einen zum Aufnahmebereich 22 des ersten Halters 20 korrespondierenden Halterverbindungsbereich 14 auf. Die Fluidregeleinheit 10 und der erste Halter 20 sind über den Aufnahmebereich 22 des ersten Halters 20 und den Verbindungsbereich 14 der Fluidregeleinheit 10 miteinander verbunden. Der Aufnahmebereich 22 und der Halterverbindungsbereich 14 sind korrespondierend zueinander ausgebildet. Gemäß Figur 2 ist der Halterverbindungsbereich 14 beispielhaft zylinderförmige ausgebildet. Gemäß einer Weiterbildung der Erfindung kann der Halterverbindungsbereich 14 jedoch auch rechteckig, elliptisch oder einer anderen Form, insbesondere einer Kombination aus einem rechteckigen und einem runden Körper, ausgebildet sein. Es muss lediglich gewährleistet sein, dass der Aufnahmebereich 22 des ersten Halters 20 korrespondierend zu dem Halterverbindungsbereich 14 der ersten Fluidregeleinheit 10 ausgebildet ist. Gemäß Figur 2 ist der Aufnahmebereich 22 des ersten Halters 20 beispielhaft zylinderförmig ausgebildet. Der Aufnahmebereich 22 ist insbesondere als zylinderförmige Ausnehmung, die insbesondere durchgehend durch den ersten Halter 20 verläuft, ausgebildet. Die Form des Aufnahmebereichs 22 des Halters 20 ist an die Form des Gehäuses 12, insbesondere des Halterverbindungsbereichs 14 der Fluidregeleinheit 10 angepasst. Um eine bestmögliche Fixierung, also eine Vermeidung von Bewegung der Fluidregeleinheit 10 relativ zu dem Halter 20 zu erreichen, ist der Innendurchmesser, insbesondere bei einer kreisförmigen oder zylinderförmigen Ausgestaltung, des Aufnahmebereichs 22 kleiner als der Außendurchmesser der Fluidregeleinheit 10 ausgeführt. Der Halter 20 wirkt im montierten Zustand mit einer Radialpressung auf die Fluidregeleinheit 10. Zur Montage wird der erste Halter 20 aufgespannt, die Fluidregeleinheit 10 in den Aufnahmebereich eingeschoben und die Aufspannung gelöst.

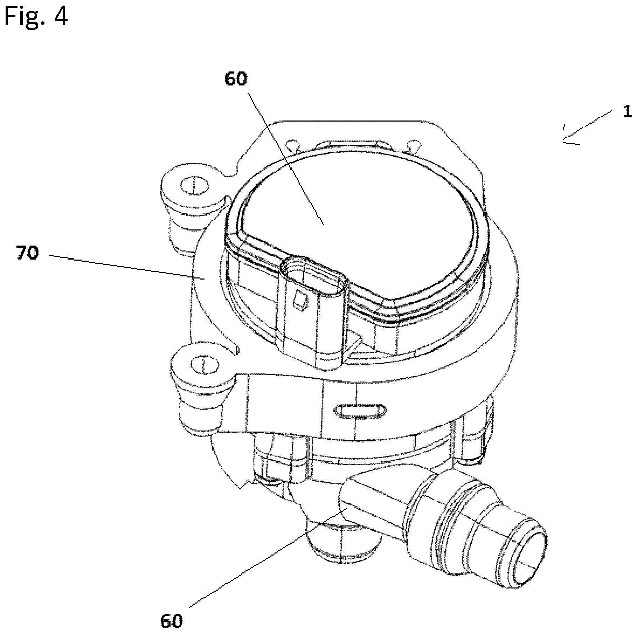

Der erste Halter 20 weist einen im Wesentlichen ringförmigen Grundkörper 24 auf. Im Wesentlichen bedeutet insbesondere, dass die Grundform des ersten Halters 20 und damit die Form des Grundkörpers 24 ringförmig ausgebildet ist. Vorzugsweise ist die Grundform abhängig vom Aufnahmebereich ausgebildet. Radial außenliegend sind an dem Halter 20 beispielhaft zwei Verbindungsmittel 26a und 26b angeordnet. Insbesondere zeigen die Verbindungselemente gemäß Figur 3 nach rechts. Die beiden Verbindungselemente 26a und 26b zeigen in die gleiche Richtung. Vorzugsweise sind die Verbindungselemente 26 so ausgerichtet, dass eine Verbindung mit einem zweiten Halter 70 hergestellt werden kann. Gemäß einer Weiterbildung der Erfindung können die Verbindungselement 26 auch in verschiedene Richtungen zeigen. Insbesondere können hierdurch mehrere Halter, entsprechend der Anzahl der Verbindungselemente 26 mit dem ersten Halter 20 verbunden werden. Die Verbindungselemente 26a und 26b sind in Umfangsrichtung voneinander beanstandet. Die Verbindungselemente 26a und 26b sind am äußeren Umfang des Halters 20 ausgebildet. Die Verbindungselemente 26a und 26b weisen eine Befestigungsaussparungen oder eine Befestigungsnasen auf, bzw. sind als solche ausgebildet. Beispielhaft weisen in Figur 2 und 3 die Verbindungsmittel eine Befestigungsausaussparung auf. Die Verbindungsmittel 26a und 26b können jedoch auch als Befestigungsnase ausgebildet sein. Auch kann eines der Verbindungsmittel eine Befestigungsaussparung aufweisen und eines der Verbindungsmittel als Befestigungsnase ausgebildet sein (siehe Figur 4). Die als Befestigungsaussparung ausgebildeten Verbindungselemente 26a und 26b weisen eine zumindest teilweise zylinderförmige Ausnehmung auf. Gemäß einer Weiterbildung der Erfindung setzt sich die Ausnehmung aus einer zylinderförmigen und einer kegelstumpfförmigen Ausnehmung zusammen. Die Befestigungsaussparungen weisen insbesondere einen Hinterschnitt auf.

Ferner weist der Halter 20 ein Befestigungsmittel 28 auf. Das Befestigungsmittel 28 ist radial außenliegend an dem Halter 20 angeordnet. Das Befestigungsmittel 28 ist so ausgebildet, dass zumindest mittelbar eine Befestigung der Vorrichtung 1 am Fahrzeug 5 erfolgen kann. Das Befestigungsmittel 28 ist zumindest mittelbar zur Befestigung am Fahrzeug 5 vorgesehen. Das Befestigungsmittel 28 weist gemäß Figur 3 Ausnehmungen auf, die insbesondere so ausgebildet sind, dass eine Montageeinrichtung 50 mit dem Halter 20 verbunden werden kann. Die Montageeinrichtung 50 und das Befestigungsmittel 28 sind hierbei insbesondere als Steckverbindung, Rastverbindung, Hakverbindung, Schraubverbindung oder Schnappverbindung ausgebildet. Das Befestigungsmittel 28 und der Halter 20 sind insbesondere einstückig ausgebildet.

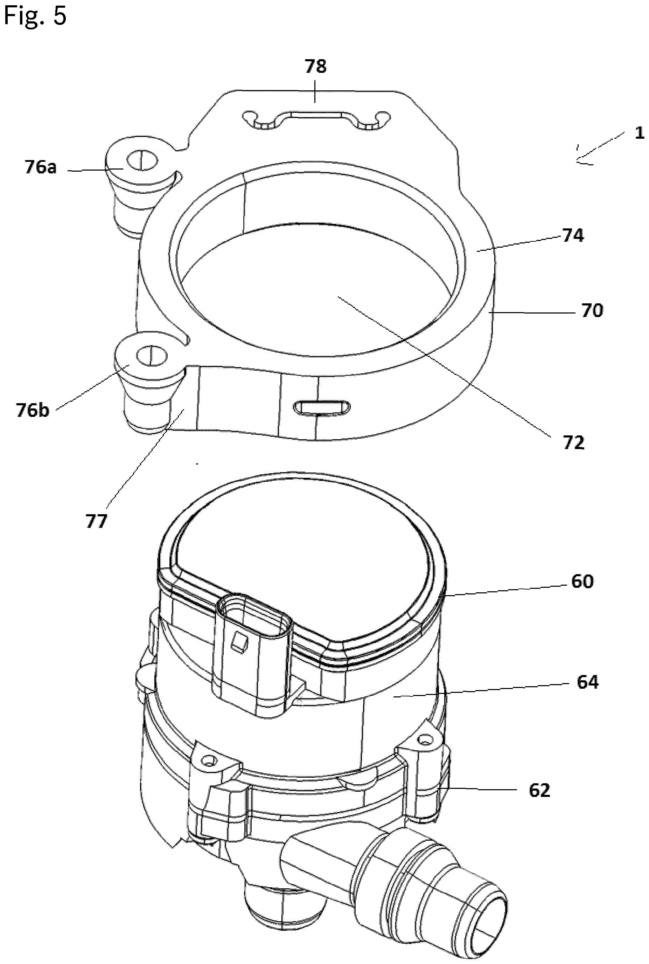

In Figur 4 und Figur 5 ist ein zweiter Halter 70 mit einer zweiten Fluidregeleinheit 60 dargestellt. Der zweite Halter 70 ist entsprechend dem ersten Halter 20 ausgebildet. Auch der zweite Halter 70 weist einen Aufnahmebereich 72 zur Aufnahme einer zweiten Fluidregeleinheit 60 auf. Ferner umfasst der zweite Halter 70 ebenfalls einen Grundkörpers 74, der im Wesentlichen zylinderförmig ausgebildet ist. Auch das Befestigungsmittel 78 dient zur Anbringung, bzw. zur Befestigung des zweiten Halters 70 an einem Kraftfahrzeug 5, oder einem Teil eines Fahrzeugs 5. Die Funktion und Ausgestaltung des zweiten Halters 70 sowie des Aufnahmebereich 72, des Grundkörpers 74 und des Befestigungsmittel 78 des zweiten Halters 70 sind identisch, wie die des ersten Halters 20, des Aufnahmebereichs 22, des Grundkörpers 24 und des Befestigungsmittel 28 des ersten Halters 20. Die Funktionsweise und/oder der Aufbau des zweiten Halters 70 entspricht dem des ersten Halters 20. Lediglich die Verbindungselemente 26a, 26b und 76a, 76b unterscheiden sich, da diese insbesondere zur Herstellung einer Verbindung, insbesondere einer Steckverbindung, korrespondierend zueinander aufgebaut sind.

Der zweite Halter 70 weist zwei Verbindungsmittel 76a, 76b auf. Die Verbindungsmittel 76a und 76b des zweiten Halters 70 zeigen in die gleiche Richtung. Die Verbindungsmittel 76a und 76b sind am äußeren Umfang des Grundkörpers 74 des zweiten Halters 70 ausgebildet. Die Verbindungsmittel 76a und 76b sind als Befestigungsnasen ausgebildet. Die Befestigungsnasen sind im Wesentlichen zylinderförmig ausgebildet. Der Durchmesser der Befestigungsnasen nimmt in Längsrichtung des Halters 70, insbesondere entgegengesetzt zur der Montagerichtung 40, zu. Die Befestigungsnasen weisen einen zylinderförmigen Abschnitt und einen kegelstumpfförmigen Abschnitt auf. Der zylinderförmige Abschnitt und der kegelstumpfförmige Abschnitt gehen ineinander über und sind einstückig ausgebildet. Im kegelförmigen Abschnitt ist eine Ausnehmung ausgebildet. Vorzugsweise verläuft die Ausnehmung durchgängig, insbesondere in Längsrichtung der Befestigungsnase, durch die komplette Befestigungsnase 76a bzw. 76b. Die Befestigungsnase, bzw. die zylinderförmigen und/oder kegelstumpfförmigen Abschnitte sind mittels eines Stegs mit dem Außenumfang des Grundkörpers 74, des Halters 70 verbunden. Der Steg verläuft hierbei über die gesamte Höhe des Halters 70. Der Steg 77 verläuft nach der Herstellung einer Verbindung zwischen einer Befestigungsnase und einer Befestigungsaussparung innerhalb der Nut der Befestigungsaussparung.

Vorzugsweise sind die Verbindungselement 26 des ersten Halters 20 korrespondierend zu den Verbindungsmitteln 76 des zweiten Halters 70 ausgebildet. Der erste Halter 20 kann Verbindungsmittel 26, die als Befestigungsnasen ausgebildet sind aufweisen, genauso wie der zweite Halter 70 Verbindungsmittel mit Befestigungsaussparungen aufweisen kann. Hierdurch ergibt sich die Möglichkeit den ersten Halter 20 mit dem zweiten Halter 70 zu verbindenden, insbesondere die Halter 20, 70 aneinander zu befestigen. Die Montagerichtung 40, mit der der erste Halter 20 und der zweite Halter 70 miteinander über die Verbindungsmittel 26 und 76 verbunden werden, verläuft insbesondere in Längsrichtung des ersten Halters 20 bzw. in Längsrichtung der ersten Fluidregeleinheit 10 und in Längsrichtung des zweiten Halter 70, bzw. in Längsrichtung der zweiten Fluidregeleinheit 60.

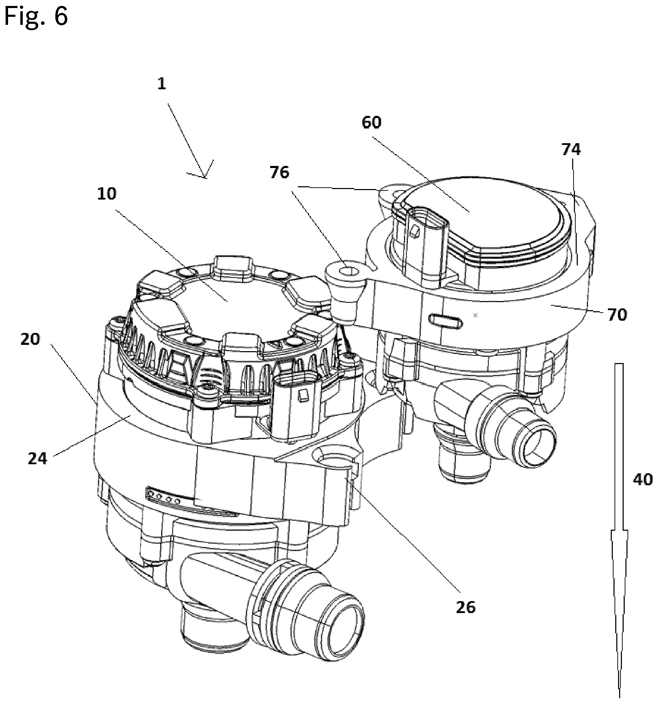

In Figur 6 sind die Fluidregeleinheiten 10, 60 in den Aufnahmebereichen des ersten Halters 20 und des zweiten Halters 70 angeordnet. Die Verbindungselemente 26 werden zu den Verbindungselemente 76 ausgerichtet und entsprechend der Montagerichtung 40 ineinander hineingeführt. Vorzugsweise wird das Verbindungselement 76 also die Befestigungsnase 76 in das Verbindungselemente 26, also die Befestigungsaussparung eingeführt. Die Verbindungselemente bzw. die Befestigungsaussparung und die Befestigungsnase stellen somit eine Steckverbindung dar.

Gemäß einer Weiterbildung der Erfindung sind die Verbindungselemente 26, 76 nicht als Steckverbindung, sondern als Schnappverbindung, Hackverbindung oder Schraubverbindung ausgebildet. Insbesondere können die Halter auch zwei oder mehrere sich unterscheidende Verbindungselemente aufweisen.

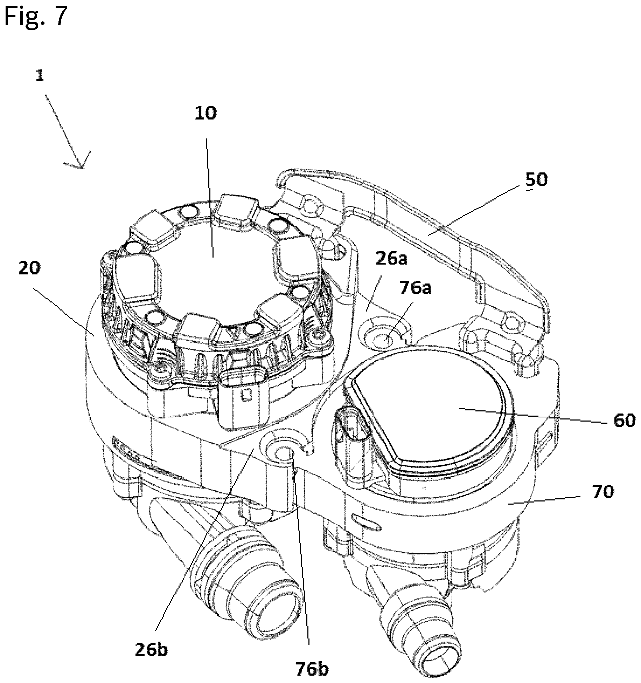

In Figur 7 ist eine Vorrichtung umfassend einen ersten Halter 20 und einen zweiten Halter 70 sowie eine erste Fluidregeleinheit 10 und eine zweite Fluidregeleinheit 60 dargestellt. Die Halter 20 und 70 sind mittels vier Verbindungselemente 26a, 26b, 76a, 76b miteinander verbunden. Jeder Halter 20, 70 weist zwei Verbindungsmittel auf, wobei jedes Verbindungmittel eines Halters 20, 70 mit einem Verbindungsmittel 26, 76 des anderen Halters 20,70 zusammenwirkt. Der erste Halter 20 und der zweite Halter 70 sind durch die Verbindungsmittel 26, 76 nach der Montage kraftschlüssig und/oder formschlüssig und/oder fest miteinander verbunden. Die Verbindungsmittel 26, 76 müssen hierbei so ausgebildet sein, das Vibrationen durch den Betrieb der Fluidregeleinheiten 10, 60 oder beispielsweise Vibrationen die vom Kraftfahrzeug 5 oder anderen Komponenten des Kraftfahrzeugs 5 ausgehend zu keiner Lösung der Verbindung der Verbindungselemente 26, 76 und damit zu einer Trennung der Halter 20, 70 führt. Dies ist durch eine erfindungsgemäße Ausbildung gegeben.

Vorteilhaft ist, dass durch das Verbinden des ersten Halters 20 mit dem zweiten Halter 70 eine Minimierung der Relativbewegungen bzw. Schwingungen der Fluidregeleinrichtungen 10, 60 zueinander erfolgt. Auch ist von Vorteil das Kollision der Fluidregeleinheiten 10, 60 vermieden werden können.

Die Halter 20,70 weisen, insbesondere einen elastischen und/oder dämpfenden, Kunststoff, vorzugsweise ein Elastomer auf. Ferner können die Halter 20, 70 einen Kunststoff- oder Metalleinleger aufweisen. Der Einleger ist zumindest teilweise von einem Elastomer umgeben, insbesondere umspritzt. Ein Einleger erhöht die Stabilität des Halters 20,70. Die Halter 20,70 dämpfen mechanische Schwingungen, insbesondere Vibrationen. Die Halter 20, 70 minimieren die Übertragung von Bewegungen, insbesondere Vibrationen zwischen dem Fahrzeug 5 und der Fluidregeleinrichtung 10, 60. Ferner verhindern die Halter ein direkte berühren der Fluidregeleinheit 10, 60 mit dem Fahrzeug 5. Ferner weisen sie an ihrer Oberfläche einen erhöhten Reibwert auf, der verhindert, dass sich die Verbindungselemente 26 des ersten Halters 20 von den Verbindungselemente 76 des zweiten Halter 70, insbesondere selbstständig, trennen können. Ferner verhindert die Oberfläche insbesondere im Aufnahmebereich 22 des ersten Halters 20 und im Aufnahmebereich 72 des zweiten Halters 70 ein verrutschen oder verschieben der Fluidregeleinheiten 10, 60 relativ gegenüber den Halter 20,70. Die Halter 20, 70 können unterschiedliche Materialien mit unterschiedlichen Härten aufweisen. Insbesondere können durch die Verwendung speziell auf die Fluidregeleinheit 10, 60 angepasster Werkstoffe, Elastomere die Dämpfung von Schwingungen minimiert werden. Mit der Minimierung von Schwingungen werden auch störende Geräusche minimiert. Der erste Halter 20 weist zumindest teilweise ein anderes Material, insbesondere eine andere Materialzusammensetzung als der zweite Halter 70 auf.

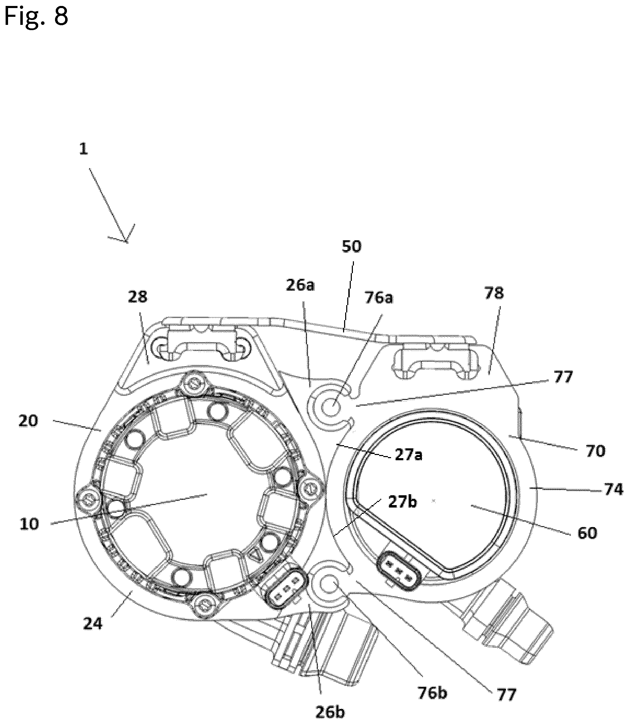

Insbesondere ist das Verbindungselement 26 mit der Befestigungsaussparung so ausgebildet, dass ausgehenden von der Befestigungsaussparung ein konkav geformter Bereich 27 ausgebildet ist. Der konkav geformte Bereich 27 weist den gleichen Radius wie der Außenradius des anderen Halters auf. Der Konkav geformte Bereich 27 ist am Außenumfang des Halters ausgebildet. Eine entsprechende Ausgestaltung ist in Figur 8 dargestellt. Der radial außenliegende Teil des zweiten Halters 70 liegt an den Verbindungselementen 26a und 26b an. Die Verbindungselement 26a und 26b sind korrespondierend mit der Oberfläche des zweiten Halters 70 ausgeführt. Der Bereich der Verbindungselemente 26 mit einem konkav geformten Bereich 27a, 27b zwischen den Befestigungsaussparungen berührt, bzw. steht in Verbindung mit dem Außenumfang des zweiten Halters 70.

Gemäß einer Weiterbildung der Erfindung weist einer der Halter 20, 70, insbesondere der erste Halter 20 oder der zweite Halter 70, weitere Verbindungsmittel 26, 76 auf. Die weiteren Verbindungsmittel 26, 76 ermöglichen die Herstellung einer Verbindung mit einem zusätzlichen Halter bzw. mit einer weiteren Fluidregeleinheit. Die Vorrichtung 1 kann somit um beliebig viele Halter und damit auch Fluidregeleinheiten erweitert bzw. ergänzt werden.

Gemäß einer Weiterbildung der Erfindung ist erste Halter 20, sowie der zweite Halter 70 bis auf die sich unterscheinenden Ausgestaltung der Verbindungselemente 26, 76 gleich ausgeführt. Eine solche Ausgestaltung senkt die Herstellungskosten.

Gemäß einer Weiterbildung können die Halter 20, 70 identisch ausgebildet sein. Beide Halter 20, 70 weisen hierbei eine Befestigungsaussparung und eine Befestigungsnase auf.

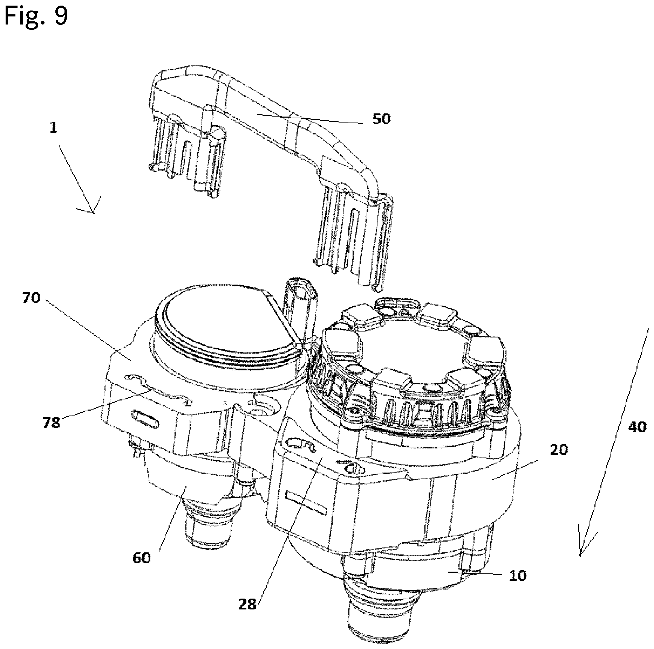

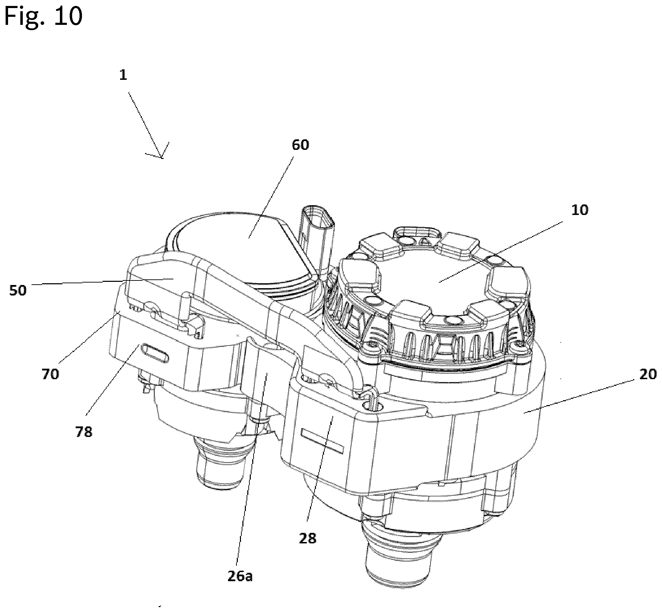

In Figur 9 ist eine weitere Ansicht der Vorrichtung 1 gemäß Figur 7 dargestellt. Die Ansicht in Figur 9 ist hierbei auf die Befestigungsmittel 28 des ersten Halters 20 und das Befestigungsmittel 78 des zweiten Halters 70 ausgerichtet. Ferner ist im oberen Bereich des Bildes die Montageeinrichtung 50 gezeigt. Die Montageeinrichtung 50 ist ein Stanzbiegeteil, das mittels eines Stanzbiegeverfahrens aus einem Blech hergestellt wird. Die Montageeinrichtung 50 ist korrespondierend zu dem Befestigungsmittel 28 des ersten Halters 20 und dem Befestigungsmittel 78 des zweiten Halters 70 ausgebildet. Die Montageeinrichtung 50 wird in Montagerichtung 40 in die Befestigungsmittel 28 und 78, insbesondere in die Ausnehmungen der Befestigungsmittel 28 und 78 eingeführt. Insbesondere aufgrund der hohen Reibung des Elastomers, den der erste Halter 20 und der zweite Halter 70 aufweist, wird verhindert, dass sich die Montageeinrichtung 40 aus dem Befestigungsmittel 28 und/oder 78 löst. Die Montageeinrichtung 50 ist wie in Figur 10 dargestellt nach der Montage mit dem Halter 20 und im Halter 70 verbunden.

Die Montageeinrichtung 50 dient zur Herstellung einer Verbindung der Vorrichtung 1 mit dem Fahrzeug 5. Die Montageeinrichtung 50 weist hierzu ein insbesondere speziell an die Kundenschnittstelle angepasstes Befestigungselement auf. Insbesondere kann eine Befestigung der Montageeinrichtung 50 an einem Fahrzeug 5 mittels fügen, insbesondere Schrauben, Schweißen, Kleben, Stecken, Klipsen, Löten usw. erfolgen.

Vorteilhaft ist, dass die Montage der Vorrichtung 1 vollautomatisch erfolgen kann. Auch können die einzelnen Komponenten der Vorrichtung 1 beliebig vormontiert werden. Zuletzt kann eine solche Vorrichtung 1 oder Teile der Vorrichtung 1 auf bestehenden Montagelinien vorgefertigt werden.

Die Fluidregeleinheit 10, 60 kann insbesondere als eine Pumpe, ein Ventil, eine Kombination aus einer Pumpe und einem Ventil, einem Fluidmeter, insbesondere eine Vorrichtung zur Erfassung des Fluiddurchflusses oder zur Erfassung der Zusammensetzung des Fluids ausgebildet sein. Auch eine beliebige Kombination ist im möglich. Ferner kann die Fluidregeleinheit 10, 60 insbesondere als elektrische Komponenten, die elektrische Energie in mechanische Energie, bzw. mechanische Bewegung umsetzten, vorzugsweise als Pumpe, Kühlkreispumpe, Ventil, Lüfter, zusätzlicher Elektromotor oder Klimakompressor oder weitere Einrichtung, die zur Versorgung und/oder Unterstützung eines Antriebsmotors eines Fahrzeugs 5 dienen, ausgebildet sein. Vorzugsweise regelt die Fluidregeleinheit 10, 60 einen Fluidstrom, aus einem Fluid. Bei dem Fluid handelt es sich um Gase oder Flüssigkeiten, die beispielsweise im Fahrzeug 5 zirkulieren und insbesondere zur Kühlung eines Antriebsmotors, insbesondere Verbrennungsmotor oder Elektromotor oder hybride Motor, verwendet werden. Insbesondere kann das Fluid als Kühlwasser, flüssiges Metall, Öl oder Alkohol ausgebildet sein.

Gemäß einer Weiterbildung der Erfindung ist die Vorrichtung 1 so ausgebildet, dass mehrere Fluidströme separat oder zusammen geregelt werden können. Insbesondere kann jede Fluidregeleinheit 10, 60 mindestens einen Fluidstrom regeln. Die Fluidströme, die durch die erste Fluidregeleinheit 10 und die Fluidströme, die durch die zweite Fluidregeleinheit 60 geregelt werden, können vorzugsweise die gleichen Fluidströme sein. Gemäß einer Weiterbildung der Erfindung ist der Fluidstrom durch den ersten Halter 20 und der Fluidstrom durch den zweiten Halter 70 identisch. Insbesondere kann die erste Fluidregeleinrichtung 10 als Pumpe und die zweite Fluidregeleinrichtung 60 als Ventil ausgebildet sein.

Unter Fluidstrom regeln oder Regelung eines Fluidstroms wird auch ein steuern, kontrollieren, sperren oder freigeben des Fluidstroms verstanden. Unter Fluidstrom in einem Fahrzeug, werden auch Fluidströme eines Fahrzeugs verstanden.

Unter Fahrzeug wird insbesondere auch ein Kraftfahrzeug, ein PKW, ein LKW, eine Eisenbahn, ein Motorrad, ein Fahrrad, ein Flugzeug, und weitere Fortbewegungsmittel, unabhängig von der Antriebsart, wie Elektromotor, Verbrennungsmotor oder Hybridmotor verstanden.

## Patentansprüche

1. Vorrichtung (1) zur Regelung mindestens eines Fluidstroms in einem Fahrzeug (5), aufweisend:
• eine erste Fluidregeleinheit (10), insbesondere eine Pumpe oder ein Ventil, zur Regelung eines ersten Fluidstroms,
• einen ersten Halter (20) mit einem Aufnahmebereich (22) für die erste Fluidregeleinheit (10) und einem ersten Befestigungsmittel (28), wobei die erste Fluidregeleinheit (10) in dem Aufnahmebereich (22) des ersten Halters (20) angeordnet ist und wobei das erste Befestigungsmittel (28) zur Befestigung des Halters (20) an dem Fahrzeug (5) vorgesehen ist und der erste Halter (20) mindestens ein Verbindungsmittel (26), zur Verbindung des ersten Halters (20) mit einem zweiten Halter (70), aufweist,
• mindestens einen zweiten Halter (70) mit einem Aufnahmebereich (72) zur Aufnahme einer zweiten Fluidregeleinheit (60) und einem zweiten Befestigungsmittel (78) zur Befestigung des zweiten Halters (70) an dem Fahrzeug (5), wobei die zweite Fluidregeleinheit (60) in dem Aufnahmebereich (72) des zweiten Halters (70) angeordnet ist, und wobei der zweite Halter (70) mindestens ein Verbindungsmittel (76) aufweist, das mit mindestens einem Verbindungsmittel (26) des ersten Halters (20) verbunden ist,
• eine Montageinrichtung (50), insbesondere zur Befestigung des ersten Halters (20) und des zweiten Halters (70) an einem Fahrzeug (5), wobei die Montageeinrichtung (50) die Befestigungsmittel (28, 78) zumindest des ersten Halters (20) und des zweiten Halters (70) verbindet.

2. Vorrichtung (1) nach dem vorhergehenden Anspruch, **dadurch gekennzeichnet, dass** die Halter (20, 70) jeweils mindestens zwei Verbindungsmittel (26a, 26b, 76a, 76b) aufweisen, die die Halter (20, 70) miteinander verbinden. Verbindungsmittel (26a, 26b, 76a, 76b) aufweisen, die die Halter (20, 70) miteinander verbinden.

3. Vorrichtung (1) nach einem der vorhergehenden Ansprüche, **dadurch gekennzeichnet, dass** mindestens ein Verbindungsmittel (26a, 26b) des ersten Halters (20) und mindestens ein Verbindungsmittel (76a, 76b) des zweiten Halters (70) eine Steckverbindung oder Schnappverbindung bilden, wobei insbesondere die Montagerichtung (40) der Steckverbindung oder der Schnappverbindung translatorisch oder radial ist.

4. Vorrichtung (1) nach einem der vorhergehenden Ansprüche, **dadurch gekennzeichnet, dass** mindestens eines der Verbindungsmittel (26a, 26b) des ersten Halters (20) eine, insbesondere hinterschneidende, Befestigungsaussparung aufweist oder als Befestigungsnase ausgebildet ist, und dass mindestens eines der Verbindungsmittel (76a, 76b) des zweiten Halters (70) eine, insbesondere hinterschneidende, Befestigungsaussparung aufweist oder als Befestigungsnase ausgebildet ist.

5. Vorrichtung (1) nach Anspruch 4, **dadurch gekennzeichnet, dass** mindestens eine Befestigungsnase im Wesentlichen zylinderförmig ausgebildet ist, wobei der Durchmesser der Befestigungsnase zunimmt, insbesondere weist mindestens eine Befestigungsnase einen zylinderförmigen Abschnitt und einen kegelstumpförmigen Abschnitt auf, wobei der zylinderförmige Abschnitt und der kegelstumpförmigen Abschnitt ineinander übergehen und vorzugsweise einstückig ausgebildet sind.

6. Vorrichtung (1) nach einem der Ansprüche 4 oder 5, **dadurch gekennzeichnet, dass** die Befestigungsnase eine, insbesondere durchgehenden, Bohrung aufweist.

7. Vorrichtung (1) nach einem der Ansprüche 4 bis 6, **dadurch gekennzeichnet, dass** die Befestigungsaussparung korrespondierend zu einer Befestigungsnase ausgebildet ist, wobei insbesondere die Befestigungsaussparung eine in Längsrichtung der Befestigungsaussparung verlaufende, insbesondere durchgehende Nut, aufweist.

8. Vorrichtung (1) nach einem der vorhergehenden Ansprüche, **dadurch gekennzeichnet, dass** der erste Halter (20) und/oder der zweite Halter (70) einen, insbesondere ringförmigen, Grundkörper (24, 74) aufweisen, wobei der Grundkörper (24, 74) den Aufnahmebereich (22, 72) umgibt, wobei insbesondere der erste Halter (20) und/oder der zweite Halter (70) mit einer, insbesondere gleichmäßigen, Radialpressung auf die Fluidregeleinheit (10, 60) wirkt.

9. Vorrichtung (1) nach einem der Ansprüche 4 bis 7 und 8, **dadurch gekennzeichnet, dass** die Befestigungsnase entlang ihrer Längsachse durch einen Steg (77) mit dem Grundkörper des Halters (20, 70) verbunden ist.

10. Vorrichtung (1) nach einem der vorhergehenden Ansprüche, **dadurch gekennzeichnet, dass** mindestens eines der Verbindungselemente (26, 76) radial außenliegend an zumindest einem der Halter (20, 70) ausgebildet ist.

11. Vorrichtung (1) nach einem der vorhergehenden Ansprüche, **dadurch gekennzeichnet, dass** zumindest einer der Halter (20, 70) zumindest teilweise, vorzugsweise vollständig, aus einem Elastomer ausgebildet ist oder ein Elastomer aufweist.

12. Vorrichtung (1) nach einem der vorhergehenden Ansprüche, **dadurch gekennzeichnet, dass** die Vorrichtung (1) drei oder mehr Halter (20, 70) aufweist, wobei mindestens ein Halter (20, 70) mindestens ein weiteres Verbindungselement (26, 76) zur Verbindung mit zwei oder mehr Haltern (20, 70) aufweist.

## Claims

1. Apparatus (1) for regulating at least one fluid flow in a vehicle (5), having:
• a first fluid regulation unit (10), in particular a pump or a valve, for regulating a first fluid flow,
• a first holder (20) with a receiving region (22) for the first fluid regulation unit (10) and with a first fastening means (28), wherein the first fluid regulation unit (10) is arranged in the receiving region (22) of the first holder (20), and wherein the first fastening means (28) is provided for fastening the holder (20) to the vehicle (5), and the first holder (20) has at least one connecting means (26) for connecting the first holder (20) to a second holder (70),
• at least one second holder (70) with a receiving region (72) for receiving a second fluid regulation unit (60) and a second fastening means (78) for fastening the second holder (70) to the vehicle (5), wherein the second fluid regulation unit (60) is arranged in the receiving region (72) of the second holder (70), and wherein the second holder (70) has at least one connecting means (76) which is connected to at least one connecting means (26) of the first holder (20),
• a mounting device (50), in particular for fastening the first holder (20) and the second holder (70) to a vehicle (5), wherein the mounting device (50) connects the fastening means (28, 78) at least of the first holder (20) and of the second holder (70) .

2. Apparatus (1) according to the preceding claim, **characterized in that** the holders (20, 70) each have at least two connecting means (26a, 26b, 76a, 76b) which connect the holders (20, 70) to one another.

3. Apparatus (1) according to either of the preceding claims, **characterized in that** at least one connecting means (26a, 26b) of the first holder (20) and at least one connecting means (76a, 76b) of the second holder (70) form a plug-action connection or snap-action connection, wherein in particular, the mounting direction (40) of the plug-action connection or of the snap-action connection is translational or radial.

4. Apparatus (1) according to one of the preceding claims, **characterized in that** at least one of the connecting means (26a, 26b) of the first holder (20) has a fastening cutout, in particular with an undercut, or is in the form of a fastening lug, and **in that** at least one of the connecting means (76a, 76b) of the second holder (70) has a fastening cutout, in particular with an undercut, or is in the form of a fastening lug.

5. Apparatus (1) according to Claim 4, **characterized in that** at least one fastening lug is of substantially cylindrical form, wherein the diameter of the fastening lug increases, in particular the at least one fastening lug has a cylindrical section and a frustoconical section, wherein the cylindrical section and frustoconical section transition into one another and are preferably formed in one piece.

6. Apparatus (1) according to either of Claims 4 and 5, **characterized in that** the fastening lug has an in particular continuous bore.

7. Apparatus (1) according to one of Claims 4 to 6, **characterized in that** the fastening cutout is formed so as to correspond with a fastening lug, wherein in particular, the fastening cutout has an in particular continuous groove running in a longitudinal direction of the fastening cutout.

8. Apparatus (1) according to one of the preceding claims, **characterized in that** the first holder (20) and/or the second holder (70) have/has an in particular ring-shaped main body (24, 74), wherein the main body (24, 74) surrounds the receiving region (22, 72), wherein in particular, the first holder (20) and/or the second holder (70) act(s) with an in particular uniform radial pressure on the fluid regulation unit (10, 60).

9. Apparatus (1) according to one of Claims 4 to 7, and 8, **characterized in that** the fastening lug is, along its longitudinal axis, connected by means of a web (77) to the main body of the holder, (20, 70) .

10. Apparatus (1) according to one of the preceding claims, **characterized in that** at least one of the connecting elements (26, 76) is formed radially at the outside on at least one of the holders (20, 70) .

11. Apparatus (1) according to one of the preceding claims, **characterized in that** at least one of the holders (20, 70), at least partially, preferably entirely, is formed from an elastomer or has an elastomer.

12. Apparatus (1) according to one of the preceding claims, **characterized in that** the apparatus (1) has three or more holders (20, 70), wherein at least one holder (20, 70) has at least one further connecting element (26, 76) for connecting to two or more holders (20, 70).

## Revendications

1. Dispositif (1) pour la régulation d'au moins un écoulement de fluide dans un véhicule (5), présentant :
- une première unité de régulation de fluide (10), en particulier une pompe ou une soupape, pour la régulation d'un premier écoulement de fluide,
- un premier support (20) avec une région de réception (22) pour la première unité de régulation de fluide (10) et un premier moyen de fixation (28), la première unité de régulation de fluide (10) étant disposée dans la région de réception (22) du premier support (20) et le premier moyen de fixation (28) étant prévu pour la fixation du support (20) au véhicule (5) et le premier support (20) présentant au moins un moyen de raccordement (26) pour le raccordement du premier support (20) à un deuxième support (70),
- au moins un deuxième support (70) avec une région de réception (72) pour la réception d'une deuxième unité de régulation de fluide (60) et un deuxième moyen de fixation (78) pour la fixation du deuxième support (70) au véhicule (5), la deuxième unité de régulation de fluide (60) étant disposée dans la région de réception (72) du deuxième support (70), et le deuxième support (70) présentant au moins un moyen de raccordement (76) qui est raccordé à au moins un moyen de raccordement (26) du premier support (20),
- un dispositif de montage (50), en particulier pour la fixation du premier support (20) et du deuxième support (70) à un véhicule (5), le dispositif de montage (50) raccordant les moyens de fixation (28, 78) d'au moins le premier support (20) et le deuxième support (70) .

2. Dispositif (1) selon la revendication précédente, **caractérisé en ce que** les supports (20, 70) présentent à chaque fois au moins deux moyens de raccordement (26a, 26b, 76a, 76b) qui raccordent l'un à l'autre les supports (20, 70).

3. Dispositif (1) selon l'une quelconque des revendications précédentes, **caractérisé en ce qu**'au moins un moyen de raccordement (26a, 26b) du premier support (20) et au moins un moyen de raccordement (76a, 76b) du deuxième support (70) forment un raccord enfichable ou un raccord par encliquetage, la direction de montage (40) du raccord enfichable ou du raccord par encliquetage étant notamment une direction de translation ou une direction radiale.

4. Dispositif (1) selon l'une quelconque des revendications précédentes, **caractérisé en ce qu**'au moins l'un des moyens de raccordement (26a, 26b) du premier support (20) présente un évidement de fixation notamment à contre-dépouille, ou est réalisé sous forme d'ergot de fixation et en ce qu'au moins l'un des moyens de raccordement (76a, 76b) du deuxième support (70) présente un évidement de fixation notamment à contre-dépouille ou est réalisé sous forme d'ergot de fixation.

5. Dispositif (1) selon la revendication 4, **caractérisé en ce qu**'au moins un ergot de fixation est réalisé essentiellement sous forme cylindrique, le diamètre de l'ergot de fixation augmentant, en particulier au moins un ergot de fixation présentant une portion de forme cylindrique et une portion de forme tronconique, la portion de forme cylindrique et la portion de forme tronconique se , prolongeant l'une dans l'autre et étant de préférence réalisées d'une seule pièce.

6. Dispositif (1) selon l'une quelconque des revendications 4 et 5, **caractérisé en ce que** l'ergot de fixation présente un alésage notamment traversant.

7. Dispositif (1) selon l'une quelconque des revendications 4 à 6, **caractérisé en ce que** l'évidement de fixation est réalisé de manière à correspondre à un ergot de fixation, l'évidement de fixation présentant notamment une rainure s'étendant dans la direction longitudinale de l'évidement de fixation, en particulier une rainure continue.

8. Dispositif (1) selon l'une quelconque des revendications précédentes, **caractérisé en ce que** le premier support (20) et/ou le deuxième support (70) présentent un corps de base (24, 74) notamment de forme annulaire, le corps de base (24, 74) entourant la région de réception (22, 72), le premier support (20) et/ou le deuxième support (70) agissant notamment avec une pression radiale, notamment uniforme, sur l'unité de régulation de fluide (10, 60).

9. Dispositif (1) selon l'une quelconque des revendications 4 à 7 et 8, **caractérisé en ce que** l'ergot de fixation est connecté le long de son axe longitudinal par une nervure (77) au corps de base du support (20, 70).

10. Dispositif (1) selon l'une quelconque des revendications précédentes, **caractérisé en ce qu**'au moins l'un des éléments de raccordement (26, 76) est réalisé de manière à être situé radialement à l'extérieur au niveau d'au moins l'un des supports (20, 70).

11. Dispositif (1) selon l'une quelconque des revendications précédentes, **caractérisé en ce qu**'au moins l'un des supports (20, 70) est réalisé au moins en partie, de préférence complètement, à partir d'un élastomère ou présente un élastomère.

12. Dispositif (1) selon l'une quelconque des revendications précédentes, **caractérisé en ce que** le dispositif (1) présente trois ou plus de trois supports (20, 70), au moins un support (20, 70) présentant au moins un autre élément de raccordement (26, 76) pour le raccordement à deux ou plus de deux supports (20, 70).
